# EUROPEAN PATENT APPLICATION

(11) **EP 2 257 047 A1**
(43) Date of publication of application: **01.12.2010**
(21) Application number: 09715078.3
(22) Date of filing: 06.02.2009
(51) Int. Cl.: H04N 5/257, G01J 1/42, G03B 17/02, H04N 5/225, H04N 5/33, H04N 5/335

(54) **INFRARED IMAGING DEVICE AND FIXED PATTERN NOISE CORRECTION METHOD**

(30) Priority: 29.02.2008 JP 2008049757
(71) Applicant: NEC Corporation, Minato-ku Tokyo 108-8001 (JP)
(72) Inventor: EGASHIRA, Kazuyuki, Tokyo 108-8001 (JP)
(74) Representative: Glawe, Delfs, Moll
(86) International application number: PCT/JP2009/052057
(87) International publication number: WO 2009/107471

(57) **Abstract**

The present invention is applied to an infrared imaging device including infrared lens (11) condensing infrared light, infrared sensor (12) detecting the condensed infrared light, and image signal output unit (18) eliminating fixed pattern noise for each pixel from an output signal from infrared sensor (12) and acquiring an image signal. The infrared imaging device includes sensor field-of-view controller (13) varying the field-of-view of infrared sensor (12) with respect to the infrared light incident on infrared sensor (12), and overall controller (16) acquiring the fixed pattern noise for each pixel on the basis of the luminance of the output signal from infrared sensor (12) when varying the field-of-view of infrared sensor (12).

## Description

### Technical Field

The present invention relates to an infrared imaging device and a fixed pattern noise correction method.

### Background Art

An infrared imaging device such as an infrared camera has a configuration where an infrared lens condenses infrared light from a subject and an infrared sensor detects the condensed infrared light.

However, the infrared sensor has a problem in which the luminance of an output signal varies between pixels. This problem is because FPN (fixed pattern noise) included in output signals from the infrared sensor varies between the pixels.

Accordingly, in order to secure image quality in the infrared imaging device, the FPN is required to be eliminated from the output signal from the infrared sensor. This requires correction of the FPN. This correction is referred to as FPN correction.

Among FPN correction methods in infrared imaging devices, there is a method of performing the FPN correction using characteristics in which the luminance of the output signal from the infrared sensor varies according to variation of infrared light incident on the infrared sensor. This FPN correction is referred to as scene-based FPN correction or scene-based NUC (scene-based nonuniformity correction).

Note that, Non-Patent Documents 1 and 2 describe in detail the methods of acquiring FPN for each pixel on the basis of variation in the luminance of the output signal from the infrared sensor according to variation of infrared light incident on the infrared sensor in the scene-based FPN correction.

When infrared imaging devices perform the scene-based FPN correction, the devices have typically acquired variation of infrared light incident on the infrared sensors from movement of the infrared imaging devices themselves or from movement of subjects.

However, movement of the infrared imaging device requires a lot of power according to the dimensions of the infrared imaging device. Accordingly, the external structure of the infrared imaging device is restricted.

In a case of relying on movement of the subject, when the movement of the subject is not suitable for the scene-based FPN correction, the FPN to be acquired becomes inappropriate.

Accordingly, in the infrared imaging device, it is an important problem to perform stable scene-based FPN correction by varying the infrared light incident on the infrared sensor without moving the infrared imaging device or the subject.
Non-Patent Document 1: "An algebraic restoration method for estimating fixed-pattern noise in infrared imagery from a video sequence", Unal Sakoglu, Russell C. Hardie, Majeed M. Hayat, Bradley M. Ratliff and J. Scott Tyo, Department of Electrical and Computer Engineering, University of New Mexico, Albuquerque, NM, USA 87131-0001, Department of Electrical and Computer Engineering, University of Dayton, Dayton, OH, USA 45469-0226
Non-Patent Document 2: "Generalized Algebraic Algorithm for Scene-based Nonuniformity Correction", Majeed M. Hayat, Bradley M. Ratliff, J. Scott Tyo and Kamil Agi, University of New Mexico, Department of Electrical and Computer Engineering, Albuquerque, NM, USA 87131, K & A Wireless LLC, 2617 Juan Tabo, NE., Suite A, Albuquerque, NM, USA 87112

### Disclosure of the Invention

It is an object of the present invention to provide an infrared imaging device and a fixed pattern noise correction method capable of solving the above problem.

An infrared imaging device of the present invention including an infrared lens condensing infrared light, an infrared sensor detecting the condensed infrared light, and an image signal output unit eliminating fixed pattern noise for each pixel from an output signal from the infrared sensor and acquiring an image signal, includes:
a sensor field-of-view controller varying the field-of-view of the infrared sensor with respect to the infrared light incident on the infrared sensor; and
an overall controller acquiring the fixed pattern noise for each pixel on the basis of the luminance of the output signal from the infrared sensor when varying the field-of-view of the infrared sensor.

A fixed pattern noise correction method according to the present invention acquiring an image signal by an infrared imaging device eliminating fixed pattern noise for each pixel from an output signal from an infrared sensor detecting infrared light condensed by an infrared lens, includes the steps of:
varying the field-of-view of the infrared sensor with respect to the infrared light incident on the infrared sensor; and
acquiring the fixed pattern noise for each pixel on the basis of the luminance of the output signal from the infrared sensor when varying the field-of-view of the infrared sensor.

The infrared imaging device of the present invention thus includes the sensor field-of-view controller varying the field-of-view of the infrared sensor with respect to the infrared light incident on the infrared sensor.

Therefore, the infrared light incident on the infrared sensor can be varied without movement of the infrared imaging device or the subject, thereby exerting an advantageous effect allowing stable scene-based FPN correction.

### Brief Description of the Drawings

Figure 1 is a diagram showing a configuration of an infrared imaging device of an exemplary embodiment of the present invention;
Figure 2 is a diagram showing a configuration of a sensor field-of-view controller according to Example 1 of the present invention;
Figure 3 is a diagram showing an example of a configuration of a refractor angle controller shown in Figure 2;
Figure 4 is a diagram showing another example of the configuration of the refractor angle controller shown in Figure 2;
Figure 5 is a diagram showing a configuration of a sensor field-of-view controller according to Example 2 of the present invention;
Figure 6 is a diagram showing an example of a configuration of a lens decentering movement controller shown in Figure 5;
Figure 7 is a diagram showing a configuration of a sensor field-of-view controller according to Example 3 of the present invention;
Figure 8 is a diagram showing a sensor movement controller shown in Figure 7 viewed from the X direction; and
Figure 9 is a diagram showing the sensor movement controller shown in Figure 7 viewed from the Y direction.

### Best Mode for Carrying Out the Invention

A best mode for carrying out the invention will hereinafter be described with reference to the drawings.

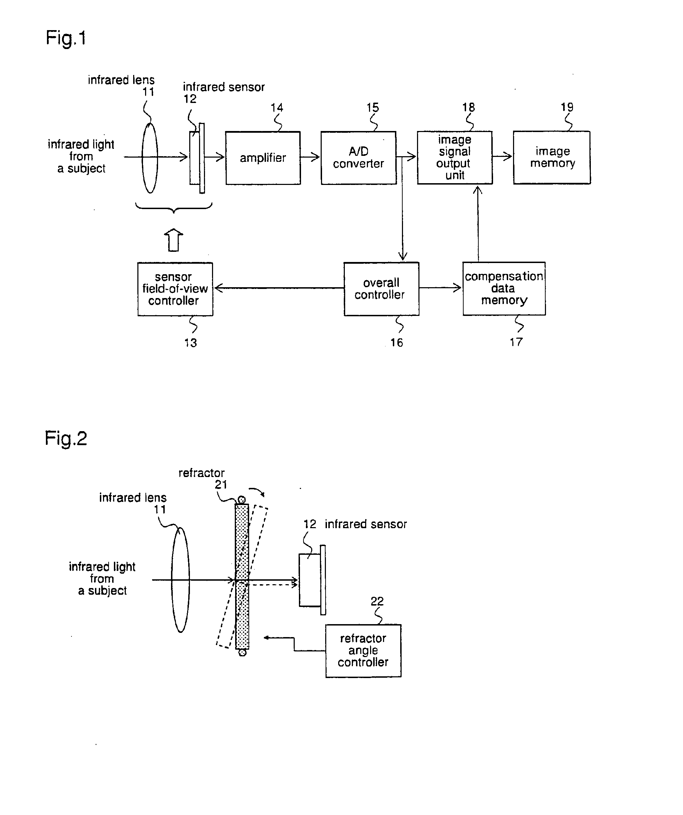

Figure 1 is a diagram showing a configuration of an infrared imaging device of this exemplary embodiment.

As shown in Figure 1, the infrared imaging device of this exemplary embodiment includes infrared lens 11, infrared sensor 12, sensor field-of-view controller 13, amplifier 14, A/D converter 15, overall controller 16, compensation data memory 17, image signal output unit 18 and image memory 19.

Infrared lens 11 condenses infrared light from a subject.

Infrared sensor 12 detects the infrared light condensed by infrared lens 11. An output signal from infrared sensor 12 is amplified by amplifier 14, converted into a digital signal by A/D converter 15 and subsequently input into overall controller 16 and image signal output unit 18.

Sensor field-of-view controller 13 varies the field-of-view of infrared sensor 12 with respect to the infrared light incident on infrared sensor 12.

On the FPN correction, overall controller 16 controls sensor field-of-view controller 13 to vary the field-of-view of infrared sensor 12. Overall controller 16 then acquires the FPN for each pixel on the basis of the luminance of the output signal from infrared sensor 12 when varying the field-of-view of infrared sensor 12, and stores the acquired FPN as compensation data in compensation data memory 17. Note that the FPN correction is automatically performed when the device starts operating or a temperature sensor, which is not shown, detects a variation in ambient temperature.

Image signal output unit 18 acquires an image signal by eliminating the FPN from the output signal from infrared sensor 12 and compensating the signal on the basis of compensation data stored in compensation data memory 17, and stores the acquired image signal on image memory 19. The image signal stored on image memory 19 is output to a display device and the like via an interface, which is not shown.

As described above, this exemplary embodiment includes sensor field-of-view controller 13 that varies the field-of-view of infrared sensor 12 with respect to the infrared light incident on infrared sensor 12.

Accordingly, the infrared light incident on infrared sensor 12 can be varied without movement of the infrared imaging device or the subject, thereby allowing stable scene-based FPN correction.

Characteristics of this exemplary embodiment lie in that sensor field-of-view controller 13 varies the field-of-view of infrared sensor 12. The methods disclosed in Non-Patent Documents 1 and 2 can be used for the method of acquiring FPN for each pixel on the basis of variation in the luminance of the output signal from infrared sensor 12 according to variation in the field-of-view of infrared sensor 12. Accordingly, detailed description thereof is omitted.

### Examples

A specific example of the infrared imaging device shown in Figure 1 will hereinafter be described.

### (Example 1)

Figure 2 is a diagram showing a configuration of sensor field-of-view controller 13 according to Example 1 of the present invention.

As shown in Figure 2, sensor field-of-view controller 13 according to this example includes refractor 21 and refractor angle controller 22.

Refractor 21 is disposed between infrared lens 11 and infrared sensor 12, and refracts the infrared light condensed by infrared lens 11. There is no limitation on refractor 21 only if it refracts infrared light. What is made from materials such as germanium, chalcogenide, sapphire or plastic can be used as refractor 21.

Refractor angle controller 22 varies the angle of refractor 21 with respect to the infrared light.

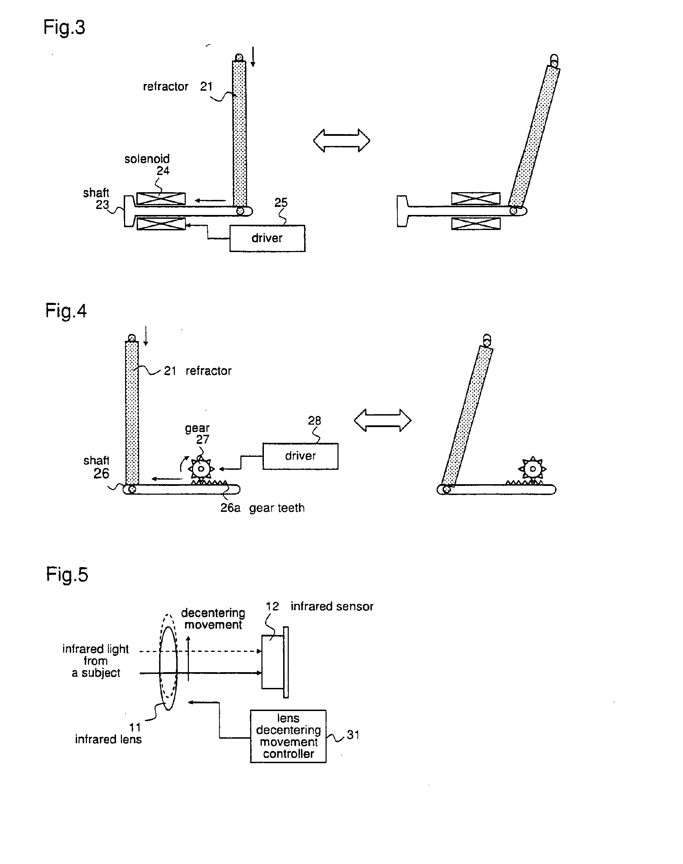

Figure 3 is a diagram showing an example of the configuration of refractor angle controller 22.

As shown in Figure 3, refractor angle controller 22 of this example includes shaft 23, solenoid 24 and driver 25.

Shaft 23 is a rod-formed shaft connected to the bottom of refractor 21. The motion of the top of refractor 21 is confined exclusively in the vertical direction.

Solenoid 24 includes a coil and a plunger operating integrally with shaft 23, and has a configuration in which the energized coil moves the plunger. Accordingly, as the energized coil moves the plunger, a connection between refractor 21 and shaft 23 moves from side to side in Figure 3; this varies the angle of refractor 21 with respect to the infrared light accordingly.

Driver 25 energizes the coil of solenoid 24.

Figure 4 is a diagram showing another example of the configuration of refractor angle controller 22.

As shown in Figure 4, refractor angle controller 22 of this example includes shaft 26, gear 27 and driver 28.

Shaft 26 is a rod-formed shaft connected to the bottom of refractor 21. Shaft 26 is formed with gear teeth 26a along a moving direction of shaft 26. The motion of the top of refractor 21 is confined exclusively in the vertical direction.

Gear 27 has a configuration of engagement with gear teeth 26a of shaft 26. Accordingly, rotation of gear 27 moves a connection between refractor 21 and shaft 23 from side to side in Figure 4; this varies the angle of refractor 21 with respect to the infrared light accordingly.

Driver 28 rotates gear 27.

As described above, this example includes refractor 21 disposed between infrared lens 11 and infrared sensor 12, and refractor angle controller 22 varying the angle of refractor 21 with respect to the infrared light.

Thus, variation of the angle of refractor 21 with respect to the infrared light varies the optical path of the infrared light, thereby allowing the field-of-view of infrared sensor 12 to be varied with respect to the infrared light.

Note that, in this example, any variation in the angle of refractor 21 such as the vertical, horizontal and oblique directions with respect to the infrared light can vary the field-of-view of infrared sensor 12. Accordingly, the angular direction of refractor 21 with respect to the infrared light is not limited to the angular direction shown in Figures 2 to 4.

### (Example 2)

Figure 5 is a diagram showing a configuration of sensor field-of-view controller 13 according to Example 2 of the present invention.

As shown in Figure 5, sensor field-of-view controller 13 according to this example includes lens decentering movement controller 31 that moves infrared lens 11 in a decentered manner while maintaining the incident surface of the infrared light stationary.

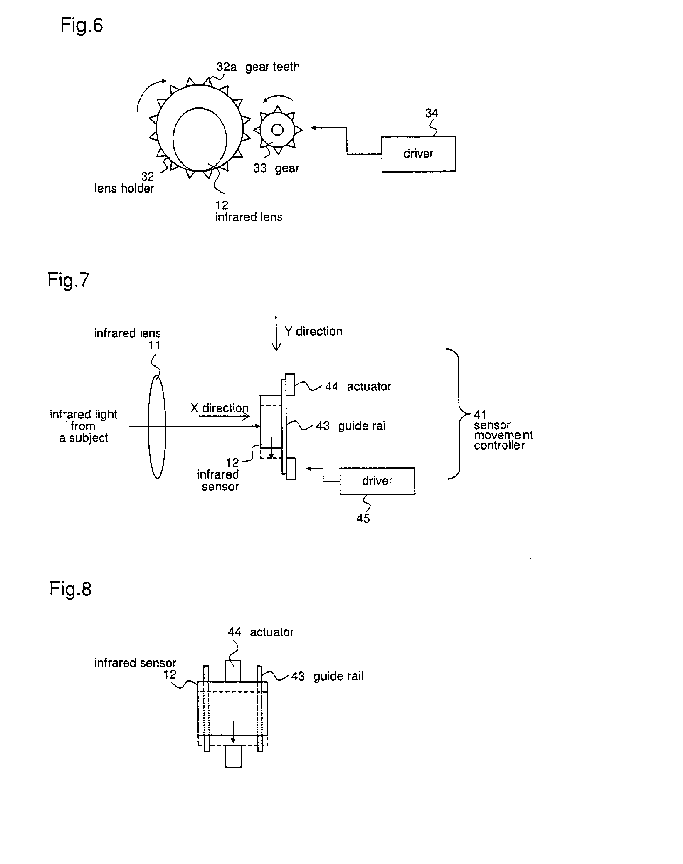

Figure 6 is a diagram showing an example of a configuration of lens decentering movement controller 31.

As shown in Figure 6, lens decentering movement controller 31 of this example includes lens holder 32, gear 33 and driver 34.

Lens holder 32 holds infrared lens 11 such that the center of infrared lens 11 is decentered with respect to the own center of lens holder 32. The rim of lens holder 32 is formed with gear teeth 32a.

Gear 33 has configuration showing that gear 33 is engaged with gear teeth 32a on the rim of lens holder 32. Accordingly, rotation of gear 33 in turn rotates lens holder 32; this moves infrared lens 11 held by lens holder 32 in the decentered manner accordingly.

Driver 33 rotates gear 33.

As described above, this example includes lens decentering movement controller 31 that moves infrared lens 11 in the decentered manner.

Thus, the decentered movement of infrared lens 11 varies the optical axis of the infrared light, allowing the field-of-view of infrared sensor 12 to be varied with respect to the infrared light.

Note that, in this example, a structure can be adopted in which lens decentering movement controller 31 is integrally formed with a focus adjustment mechanism and in which rotation of infrared lens 11 for adjusting the focus moves infrared lens 11 in the decentered manner, thereby allowing compensation data to be acquired.

### (Example 3)

Figure 7 is a diagram showing a configuration of sensor field-of-view controller 13 according to Example 3 of the present invention.

As shown in Figure 7, sensor field-of-view controller 13 according to this example includes sensor movement controller 41 that moves infrared sensor 12 parallel (in the vertical direction in Figure 7) while maintaining the incident surface of the infrared light stationary.

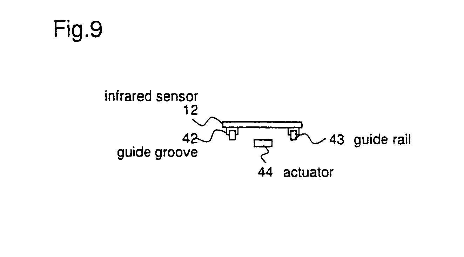

Figure 8 is a diagram showing sensor movement controller 41 viewed from the X direction in Figure 7. Figure 9 a diagram showing sensor movement controller 41 viewed from the Y direction in Figure 7.

As shown in Figures 7 to 9, sensor movement controller 41 of this example includes guide grooves 42, guide rails 43, actuator 44 and driver 45.

Guide grooves 42 are two parallel, concave grooves attached to a rear surface of the surface of infrared sensor 12 opposite to infrared lens 11.

Guide rails 43 are two parallel, convex rails that are arranged at a side of the rear surface of infrared sensor 12 and engaged with two respective guide grooves 42.

Actuator 44 moves infrared sensor 12 parallel along guide rails 43, while maintaining the incident surface of the infrared light stationary.

For example, actuator 44 may be a piezoelectric element that expands and contracts according to the application of voltage. In this case, expansion and contraction of the piezoelectric element according to the application of voltage in turn moves infrared sensor 12 in the vertical direction in Figure 7 accordingly.

Actuator 44 includes a plunger operating integrally with a coil and infrared sensor 12, and may be a solenoid where an energized coil moves the plunger. In this case, movement of the plunger by the energized coil in turn moves infrared sensor 12 in the vertical direction in Figure 7 accordingly.

Driver 45 drives actuator 44. For example, when actuator 44 is the piezoelectric element, driver 45 applies voltage to the piezoelectric element. When actuator 44 is solenoid, driver 45 energizes the coil of the solenoid.

As described above, this example includes sensor movement controller 41 that translates infrared sensor 12, thereby allowing the field-of-view of infrared sensor 12 to be varied with respect to the infrared light.

Note that, in this example, any variation in the moving direction of infrared sensor 12 such as the vertical, horizontal and oblique directions can vary the field-of-view of infrared sensor 12. Accordingly, the moving direction of infrared sensor 12 is not limited to the moving direction shown in Figures 7 to 9.

### (Example 4)

This example has a configuration that combines refractor 21 and refractor angle controller 22 according to Example 1 and sensor movement controller 41 according to Example 3 as sensor field-of-view controller 13. Note that drawings of this example are omitted.

More specifically, first, this example varies the angle of refractor 21, which is provided before infrared sensor 12, with respect to the infrared light, and further translates infrared sensor 12 itself.

Thus, by combining of sensor field-of-view controllers 13 according to Example 1 and 3, variation of the angular direction of refractor 21 with respect to the infrared light and moving direction of infrared sensor 12 only in respective single directions enables the field-of-view of infrared sensor 12 to be changed to various positions according to the combination.

Although the present invention has thus been described above with reference to the examples, the present invention is not limited to the above examples. Various modifications that any person skilled in the art can understand may be made to the configuration and details of the present invention within the scope of the present invention.

The present invention claims priority based on Japanese Patent Application No. 2008-049757 filed on February 29, 2008, the disclosure of which is incorporated herein by reference in its entirety.

## Claims

1. An infrared imaging device including an infrared lens condensing infrared light, an infrared sensor detecting the condensed infrared light, and an image signal output unit eliminating fixed pattern noise for each pixel from an output signal from the infrared sensor and acquiring an image signal, comprising:
a sensor field-of-view controller varying the field-of-view of the infrared sensor with respect to the infrared light incident on the infrared sensor; and
an overall controller acquiring the fixed pattern noise for each pixel on the basis of the luminance of the output signal from the infrared sensor when varying the field-of-view of the infrared sensor.

2. The infrared imaging device according to claim 1,
wherein the sensor field-of-view controller comprises:
a refractor that is disposed between the infrared lens and the infrared sensor and refracts the infrared light condensed by the infrared lens; and
a refractor angle controller varying the angle of the refractor with respect to the infrared light.

3. The infrared imaging device according to claim 2,
wherein the refractor angle controller comprises:
a shaft connected to a part of the refractor; and
a solenoid that includes a coil and a plunger operating integrally with the shaft and that moves the plunger by energizing the coil, moves a connection between the refractor and the shaft and thereby varies the angle of the refractor with respect to the infrared light.

4. The infrared imaging device according to claim 2,
wherein the refractor angle controller comprises:
a shaft that is connected to a part of the refractor and is formed with gear teeth along a moving direction; and
a gear that rotates in engagement with the gear teeth of the shaft, and thereby moves a connection between the refractor and the shaft and varies the angle of the refractor with respect to the infrared light.

5. The infrared imaging device according to claim 1,
wherein the sensor field-of-view controller comprises
a lens decentering movement controller moving the infrared lens in a decentered manner.

6. The infrared imaging device according to claim 5,
wherein the lens decentering movement controller comprises:
a lens holder that holds the infrared lens so as to decenter the center of the infrared lens with respect to the center of said lens holder and is formed with gear teeth on a rim of the holder; and
a gear that rotates the lens holder by rotating in engagement with the gear teeth on the rim of the lens holder and thereby moves the infrared lens held by the lens holder in the decentered manner.

7. The infrared imaging device according to claim 1,
wherein the sensor field-of-view controller comprises
a sensor movement controller translating the infrared sensor.

8. The infrared imaging device according to claim 7,
wherein the sensor movement controller comprises:
a guide groove attached to the infrared sensor on a rear surface of a surface opposite to the infrared lens;
a guide rail disposed at a side of the rear surface of the infrared sensor and engaged with the guide groove; and
an actuator causing the infrared sensor to translate along the guide rail.

9. The infrared imaging device according to claim 8, wherein the actuator is a piezoelectric element that expands and contracts by applying voltage and thereby translates the infrared sensor along the guide rail.

10. The infrared imaging device according to claim 8, wherein the actuator is a solenoid including a coil and a plunger that operates integrally with the infrared sensor, and moves by energizing the coil, thereby translating the infrared sensor along the guide rail.

11. The infrared imaging device according to claim 1,
wherein the sensor field-of-view controller comprises:
a refractor that is disposed between the infrared lens and the infrared sensor and refracts the infrared light condensed by the infrared lens;
a refractor angle controller that varies the angle of the refractor with respect to the infrared light; and
a sensor movement controller translating the infrared sensor.

12. The infrared imaging device according to claim 11,
wherein the refractor angle controller comprises:
a shaft connected to a part of the refractor; and
a solenoid that includes a coil and a plunger operating integrally with the shaft and that moves the plunger by energizing the coil, moves a connection between the refractor and the shaft and thereby varies the angle of the refractor with respect to the infrared light.

13. The infrared imaging device according to claim 11,
wherein the refractor angle controller comprises:
a shaft that is connected to a part of the refractor and is formed with gear teeth along a moving direction; and
a gear that rotates in engagement with the gear teeth of the shaft, and thereby moves a connection between the refractor and the shaft and varies the angle of the refractor with respect to the infrared light.

14. The infrared imaging device according to claim 11,
wherein the sensor movement controller comprises:
a guide groove attached to the infrared sensor on a rear surface of a surface opposite to the infrared lens;
a guide rail disposed at a side of the rear surface of the infrared sensor and engaged with the guide groove; and
an actuator causing the infrared sensor to translate along the guide rail.

15. The infrared imaging device according to claim 14, wherein the actuator is a piezoelectric element that expands and contracts by applying voltage and thereby translates the infrared sensor along the guide rail.

16. The infrared imaging device according to claim 14, wherein the actuator is a solenoid including a coil and a plunger that operates integrally with the infrared sensor, and moves by energizing the coil, thereby translating the infrared sensor along the guide rail.

17. A fixed pattern noise correction method of acquiring an image signal by an infrared imaging device eliminating fixed pattern noise for each pixel from an output signal from an infrared sensor detecting infrared light condensed by an infrared lens, comprising the steps of:
varying the field-of-view of the infrared sensor with respect to the infrared light incident on the infrared sensor; and
acquiring the fixed pattern noise for each pixel on the basis of the luminance of the output signal from the infrared sensor when varying the field-of-view of the infrared sensor.

18. The fixed pattern noise correction method according to claim 17,
wherein the step of varying the field-of-view of the infrared sensor includes varying the angle of a refractor, which is disposed between the infrared lens and the infrared sensor and refracts the infrared light, with respect to the infrared light.

19. The fixed pattern noise correction method according to claim 17,
wherein the step of varying the field-of-view of the infrared sensor includes moving the infrared lens in a decentered manner.

20. The fixed pattern noise correction method according to claim 17,
wherein the step of varying the field-of-view of the infrared sensor includes translating the infrared sensor.
